# EUROPÄISCHE PATENTSCHRIFT

(11) **EP 3 987 556 B1**
(45) Veröffentlichungstag und Bekanntmachung des Hinweises auf die Patenterteilung: **04.06.2025**
(21) Anmeldenummer: 20733743.7
(22) Anmeldetag: 17.06.2020
(51) Int. Cl.: H01F 27/02, H01F 41/00, H01F 27/22, H01F 5/06, H05K 7/20

(54) **UMHÜLLTES BAUTEIL UND VERFAHREN ZU SEINER HERSTELLUNG**
COVERED COMPONENT AND METHOD FOR PRODUCING SAME
COMPOSANT ENROBÉ ET SON PROCÉDÉ DE FABRICATION

(30) Priorität: 18.06.2019 DE 102019208829
(43) Veröffentlichungstag der Anmeldung: 27.04.2022
(73) Patentinhaber: Robert Bosch GmbH, 70442 Stuttgart (DE)
(72) Erfinder: HEJTMANN, Georg, 74395 Mundelsheim (DE); HOLZ, Rainer, 71672 Marbach (DE); BURGHARDT, Andreas, 70372 Stuttgart (DE)
(86) Internationale Anmeldenummer: PCT/EP2020/066720
(87) Internationale Veröffentlichungsnummer: WO 2020/254379

(56) Entgegenhaltungen:
- WO-A1-2014/034335
- DE-A1- 102008 030 454
- DE-A1- 102011 088 043
- DE-A1- 102013 214 646

## Beschreibung

Die vorliegende Erfindung betrifft ein umhülltes Bauteil. Weiterhin betrifft sie ein Verfahren zur Herstellung des umhüllten Bauteils.

### Stand der Technik

Bei Anwendungen in der Leistungselektronik und in elektrischen Maschinen, in denen Verlustwärme abgeführt werden muss, werden häufig wärmeleitfähige Umhüllmassen verwendet, um elektrisch leitfähige Elemente teilweise zu umhüllen. In der Regel besitzen diese Umhüllmassen einen anderen Wärmeausdehnungskoeffizienten als die zu umhüllenden und sich erwärmenden Elemente, die beispielsweise aus Kupfer bestehen können. Dies kann bei einer thermischen Zyklierung zu einer Ablösung der Umhüllmasse von den elektrisch leitfähigen Elementen oder zu Rissen führen, was die Abführung der Wärme deutlich verschlechtert.

Die WO 2014/034335 A1 offenbart eine Spulenkomponente mit hohen Wärmeableitungseigenschaften.

Die DE 10 2011 088043 A1 offenbart eine wärmeabführungsoptimierte Verpackung für ein Elektronikbauelement.

Die DE 10 2008 030454 A1 offenbart eine Betätigungsvorrichtung mit einem Gehäuse und einem darin angeordneten Spulenkörper mit Spulenwicklung.

Die DE 10 2013 214646 A1 offenbart ein Gehäuse, welches aus einem Harzmaterial geformt und einen ersten Flanschabschnitt eines Spulenkörpers, welcher einen Schmelzvorsprung ausbildet, der mit dem Gehäuse verbunden und verschmolzen ist.

### Offenbarung der Erfindung

Das umhüllte Bauteil weist ein wärmeleitfähiges Element und eine wärmeleitfähige Umhüllmasse auf, die einen Innenbereich des Elements ausfüllt. Dabei wird unter einem Innenbereich ein Bereich verstanden, der zumindest teilweise von dem Element umschlossen wird. Es ist hingegen nicht erforderlich, dass das Element den Innenbereich vollständig einschließt.

Vorzugsweise enthält die Umhüllmasse mindestens 25 Volumenprozent keramische Partikel bezogen auf 100 Volumenprozent der Umhüllmasse, um eine gute Wärmeleitfähigkeit der Umhüllmasse zu gewährleisten. Die keramischen Partikel sind insbesondere ausgewählt aus der Gruppe bestehend aus Aluminiumnitrid, Bornitrid, Aluminiumoxid, Siliziumnitrid und Gemischen daraus. Das Matrixmaterial der Umhüllmasse, in welches die Partikel eingebettet sind, kann beliebig gewählt werden. Beispielsweise kann es sich um eine Zementmatrix oder um eine Polymermatrix handeln.

Das Element weist mehrere Öffnungen auf, die seinen Innenbereich mit einem Außenbereich des Elements verbinden. Dabei füllt die Umhüllmasse die Öffnungen aus. Indem die Umhüllmasse die Struktur des Elements durchfließt und von allen Seiten umschließt oder zumindest in die Öffnungen eindringt, bleibt der Kontakt zwischen der Umhüllmasse und dem Element auch bei Thermozyklierung bestehen. Wärme kann dann von einer Wärmequelle über die Umhüllmasse zur Wärmeabfuhr an das Element weitergeleitet werden. Bei dem Element handelt es sich um einen Spulentopf, wie er in der Leistungselektronik verwendet werden. Besonders gut kann das umhüllte Bauteil auf der Grundlage eines Spulentopfes gefertigt werden, da in diesen einfach eine Vielzahl von Öffnungen eingebracht werden kann, ohne seine Funktion zu beeinträchtigen. Der Spulentopf kann auch als Spulenbecher verstanden werden. Hierbei ist im Rahmen der vorliegenden Erfindung unter dem Begriff Spulentopf eine topfförmige Spule bzw. unter dem Begriff Spulenbecher eine becherförmige Spule zu verstehen.

Die Wärmequelle ist vorzugsweise zumindest teilweise und besonders bevorzugt vollständig von dem Element umgeben. Weiterhin ist die Wärmequelle vorzugsweise vollständig von der Umhüllmasse umgeben. Beispielsweise kann es sich bei der Wärmequelle um einen gewickelten Magnetkern handeln. Dieser kann insbesondere in einem Bauteil in Form eines Spulentopfes angeordnet sein, wobei der Spulentopf zum Wärmeaustausch mit dem Magnetkern mit der Umhüllmasse gefüllt ist.

In einer nicht zur Erfindung gehörenden Ausführungsform des Bauteils ist das Element als Drahtgeflecht ausgeführt. Hierdurch weist es automatisch eine Vielzahl von Öffnungen auf, deren Größe durch die Dichte des Drahtgeflechts eingestellt werden kann.

Die Öffnungen sind als Bohrungen in einem Blech ausgeführt. Dieses Blech kann beispielsweise die Mantelfläche eines zylinderförmigen Spulentopfes bilden. Die Ausführung der Öffnungen als Bohrungen in einem Blech hat den Vorteil, dass die Öffnungen bedarfsgerecht mit den unterschiedlichsten Geometrien ausgeführt werden können.

In einer Ausführungsform des umhüllten Bauteils ist die Umhüllmasse weiterhin in dem Außenbereich angeordnet. Die Umhüllmasse im Innenbereich und die Umhüllmasse im Außenbereich werden dann durch die Umhüllmasse in den Öffnungen miteinander verbunden. Hierdurch wird sie von beiden Seiten an das Element herangedrückt, was die Bildung von Spalten und Rissen verhindert. Diese Ausführungsform des umhüllten Bauteils kann unabhängig von der Form der Öffnungen allein dadurch hergestellt werden, dass eine entsprechende Anordnung der Umhüllmasse erfolgt.

Die Öffnungen sind als Bohrungen in einem Blech ausgeführt und weisen an ihrem dem Außenbereich zugewandten Ende jeweils eine Senkung auf. Hierdurch wird die Umhüllmasse so in dem Element verankert, dass sie sich auch dann nicht von diesem ablösen kann, wenn sie lediglich in den Öffnungen und im Innenbereich des Elements nicht jedoch im Außenbereich angeordnet ist.

In dem Verfahren zur Herstellung des umhüllten Bauteils wird zunächst ein wärmeleitfähiges Element bereitgestellt, das mehrere Öffnungen aufweist. In diesem wird mindestens eine Wärmequelle angeordnet. Anschließend wird das Bauteil mit der Umhüllmasse in flüssiger Form befüllt, sodass diese in die Öffnungen eindringen kann. Nach Erhärten der Umhüllmasse, wird das umhüllte Bauteil erhalten. Das Erhärten kann dabei je nach Zusammensetzung der Umhüllmasse in unterschiedlichen Prozessen folgen. Wird als Umhüllmasse eine Zementmasse verwendet, so kann diese beispielsweise durch hydraulisches Abbinden erhärten. Handelt es sich bei der Umhüllmasse hingegen um eine Polymermasse, so kann diese beispielsweise durch wärmeinduzierte oder fotoinduzierte Quervernetzung erhärten.

Wenn ein umhülltes Bauteil hergestellt werden soll, in dem die Umhüllmasse nicht nur im Innenbereich und in den Öffnungen, sondern auch im Außenbereich des Elements angeordnet ist, so kann dies in einer Ausführungsform des Verfahrens realisiert werden, indem das Element in einer Form angeordnet wird und die Form anschließend so mit der Umhüllmasse gefüllt wird, dass diese den Außenbereich des Elements mit einer vorgebbaren Dicke bedeckt. Diese Dicke, um welche die Umhüllmasse über das Element hinaussteht, kann in Abhängigkeit unterschiedlicher Parameter vorgegeben werden wie insbesondere dem thermischen Ausdehnungskoeffizienten der Umhüllmasse und des Elements, der Festigkeit und der Elastizität der Umhüllmasse und der Dicke des zu umhüllenden Elements.

Wenn das Verfahren hingegen zur Herstellung eines umhüllten Bauteils verwendet werden soll, indem die Öffnungen an ihrem dem Außenbereich zugewandten Ende jeweils eine Senkung aufweisen, so ist in einer Ausführungsform des Verfahrens vorgesehen, dass die Öffnungen im Außenbereich zunächst mittels einer Abdeckung abgedeckt werden. Bei dieser Abdeckung kann es sich insbesondere um ein Klebeband handeln. Die flüssige Umhüllmasse wird anschließend in den Innenbereich des Elements eingefüllt, sodass sie in die Öffnungen hineinfließen kann aufgrund der Abdeckung jedoch nicht aus diesen herausfließen kann. Nach Erhärten der Umhüllmasse im Innenbereich und in den Öffnungen, kann die Abdeckung dann wieder entfernt werden.

### Kurze Beschreibung der Zeichnungen

Ausführungsbeispiele der Erfindung sind in Zeichnungen dargestellt und werden in der nachfolgenden Beschreibung näher erläutert.
Figur 1 zeigt eine Querschnittsdarstellung eines wärmeleitfähigen Elements mit einer Umhüllmasse gemäß dem Stand der Technik.
Figur 2 zeigt einen Spulentopf, welcher in einem Ausführungsbeispiel des erfindungsgemäßen Verfahrens mit einer Umhüllmasse umhüllt werden kann, um ein erfindungsgemäß umhülltes Bauteil zu erhalten.
Figur 3 zeigt in einer Querschnittsdarstellung die Herstellung eines umhüllten Bauteils in einem Ausführungsbeispiel.
Figur 4 zeigt in einer Querschnittsdarstellung die Herstellung eines umhüllten Bauteils in einem Ausführungsbeispiel des erfindungsgemäßen Verfahrens.
Figur 5 zeigt eine isometrische Darstellung eines Ausführungsbeispiels eines umhüllten Bauteils.

### Ausführungsbeispiel der Erfindung

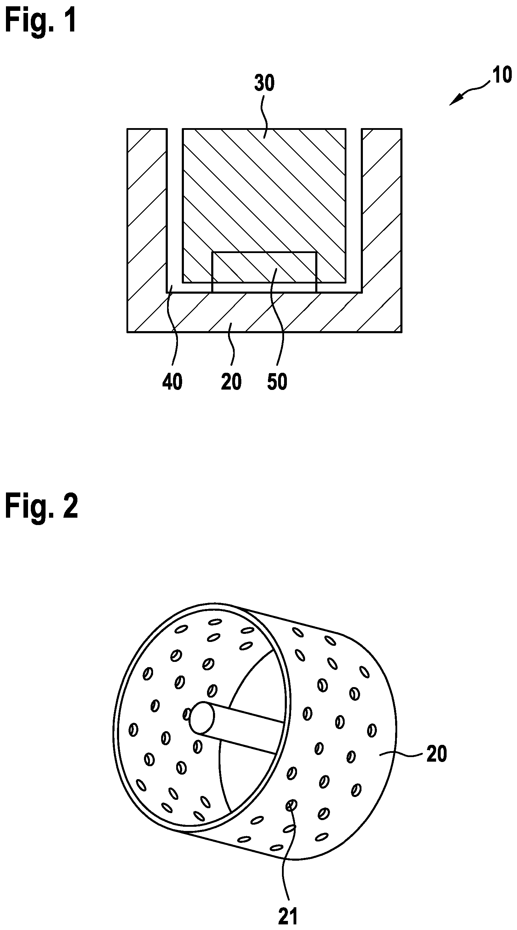

In Figur 1 ist ein herkömmliches Bauteil 10 für die Leistungselektronik hergestellt, welches ein wärmeleitfähiges Element 20 in Form eines Spulentopfes aufweist. Der Innenbereich des Elements 20 ist mit einer Umhüllmasse 30 befüllt, bei welcher es sich vorliegend um eine Zementmasse auf Basis von Tonerdezement handelt, die 50 Volumenprozent Aluminiumoxidpartikel enthält. Es ist erkennbar, dass sich durch Thermozyklierung ein Spalt 40 zwischen der Umhüllmasse 30 und dem Element 20 gebildet hat. Eine zuverlässige Wärmeübertragung zwischen einem gewickelten Magnetkern als Wärmequelle 50 über die Umhüllmasse 30 auf das Element 20 ist damit nicht mehr gewährleistet.

Figur 2 zeigt ein wärmeleitfähiges Element 20 in Form eines Spulentopfes, der zur Herstellung eines umhüllten Bauteils 10 gemäß einem Ausführungsbeispiel der Erfindung geeignet ist. Er hat die Form eines an einem Ende offenen Kreiszylinders. Seine Mantelfläche wird durch ein Kupferblech gebildet, in welchem Öffnungen 21 in Form von im Wesentlichen kreiszylinderförmigen Bohrungen gebildet sind.

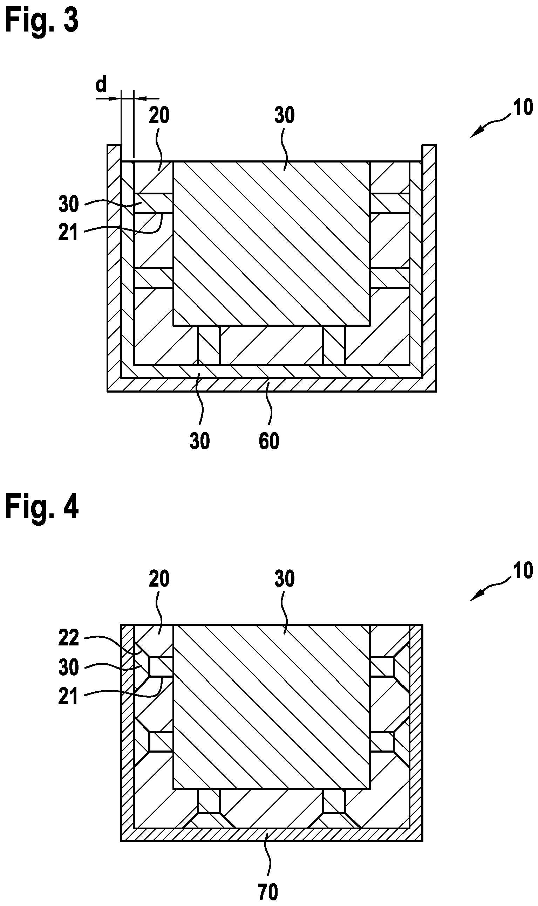

Figur 3 zeigt, wie ein Ausführungsbeispiel eines nicht zur Erfindung gehörenden Verfahrens aus diesem Spulentopf ein umhülltes Bauteil 10 gemäß einem nicht zur Erfindung gehörenden Ausführungsbeispiel hergestellt werden kann. Nachdem die in Figur 3 nicht dargestellte Wärmequelle 50 im Spulentopf fixiert wurde, wird der Spulentopf so in einer Form 60 aus Silikon platziert, dass seine Mantelfläche überall einen gleichen Abstand d von der Innenwand der Form 60 aufweist. Durch nicht dargestellte Abstandshalter wird gewährleistet, dass auch der Abstand des Bodens des Spulentopfes vom Boden der Form 60 dem Abstand d entspricht. Anschließend wird eine flüssige Zementmasse, welche der Zementmasse gemäß Figur 1 entspricht, in den Spulentopf eingefüllt. Sie fließt aus seinem Innenraum durch die Öffnungen 21 heraus und füllt damit auch den gesamten Außenbereich zwischen dem Spulentopf und der Form 60 aus. Nach Erhärten der Zementmasse bildet diese eine Umhüllmasse 30, die den Innenbereich des Elements 20 ausfüllt und die Wärmequelle 50 thermisch mit dem Spulentopf verbindet. Sie umgibt den Spulentopf mit einer äußeren Schicht der Dicke d, die durch die Öffnungen 21 mit der Umhüllmasse 30 im Inneren des Spulentopfes verbunden ist. Dadurch wird die Umhüllmasse 30 innen und außen so am Spulentopf verankert, dass eine Ablösung oder Rissbildung bei Thermozyklierung ausgeschlossen ist.

Figur 4 zeigt die Herstellung eines umhüllten Bauteils 10 gemäß einem Ausführungsbeispiel der Erfindung in einem Ausführungsbeispiel des erfindungsgemäßen Verfahrens. Hierzu wird ein wärmeleitfähiges Element 20 in Form eines Spulentopfes verwendet, dessen Öffnungen 21 sich von den Öffnungen 21 des Spulentopfes gemäß Figur 2 unterscheiden. Während die Öffnungen 21 im ersten Ausführungsbeispiel im Wesentlichen kreiszylinderförmige Bohrungen sind, weisen die Öffnungen im zweiten Ausführungsbeispiel an ihrem dem Innenbereich des Elements 20 zugewandten Ende ebenfalls ein kreiszylinderförmigen Teil auf, der an dem Außenbereich zugwandten Ende jedoch in eine Senkung 22 übergeht. Dies bedeutet, dass sich der Querschnitt jeder Öffnung 21 im Bereich der Senkung 22 von innen nach außen hin vergrößert. Alle Öffnungen 21 sind von außen mittels einer Abdeckung 70 in Form von Klebebändern verschlossen. Wie im ersten Ausführungsbeispiel, wird die flüssige Zementmasse in den Innenraum des Elements 20 eingefüllt. Sie läuft ebenfalls in die Öffnungen 21 hinein, kann jedoch aufgrund der Abdeckung 70 nicht aus diesen herauslaufen. Nach dem hydraulischen Abbinden und damit Erhärten der Zementmasse bildet diese eine Umhüllmasse 30 im Innenbereich und in den Öffnungen 21 des Elements 20. Die Abdeckung 70 kann nun entfernt werden. Auch in diesem Ausführungsbeispiel ist die Bildung von Spalten und Rissen durch Thermozyklierung ausgeschlossen, da die Umhüllmasse 30 in den Öffnungen 21 im Bereich der Senkungen 22 jeweils im Element 20 verankert ist.

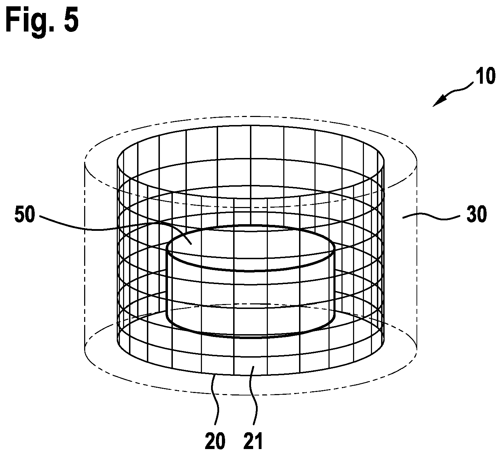

Ein nicht zur Erfindung gehörendes Ausführungsbeispiel eines umhüllten Bauteils 10ist in Figur 5 dargestellt. In diesem ist das Element 20 als Spulentopf in Form eines Drahtgeflechts ausgeführt, der vorliegend aus Kupferdraht besteht. Die Maschen des Drahtgeflechtes bilden hierbei Öffnungen 21 im Element 20. Ein Spulenkern als Wärmequelle 50 ist im Element 20 angeordnet und dieses ist innen und außen mit einer Umhüllmasse 30 umgossen, die sich durch die Öffnungen 21 hindurch erstreckt. Die Herstellung dieses Ausführungsbeispiels des umhüllten Bauteils 10 kann analog der Herstellungsweise im ersten Ausführungsbeispiel in einer Form erfolgen.

## Patentansprüche

1. Umhülltes Bauteil (10), aufweisend ein wärmeleitfähiges Element (20) und eine wärmeleitfähige Umhüllmasse (30), die einen Innenbereich des Elements (20) ausfüllt, wobei das Element (20) mehrere Öffnungen (21) aufweist, die den Innenbereich mit einem Außenbereich des Elements (20) verbinden, wobei die Umhüllmasse (30) die Öffnungen (21) ausfüllt, wobei das Element (20) ein Spulentopf ist, **dadurch gekennzeichnet, dass** die Öffnungen (21) als Bohrungen in einem Blech ausgeführt sind und an ihrem dem Außenbereich zugewandten Ende jeweils eine Senkung (22) aufweisen.

2. Umhülltes Bauteil (10) nach Anspruch 1, **dadurch gekennzeichnet, dass** die Umhüllmasse (30) weiterhin in dem Außenbereich angeordnet ist.

3. Umhülltes Bauteil (10) nach einem der Ansprüche 1 oder 2, **dadurch gekennzeichnet, dass** es eine Wärmequelle (50) aufweist, die vollständig von der Umhüllmasse (30) umgeben ist.

4. Verfahren zur Herstellung eines umhüllten Bauteils (10) nach Anspruch 3, wobei in einem Innenbereich eines wärmeleitfähigen Elements (20) das mehrere Öffnungen (21) aufweist mindestens eine Wärmequelle (50) angeordnet wird und das Element (20) dann derart mit einer Umhüllmasse (30) befüllt wird, dass diese in die Öffnungen (21) eindringt.

5. Verfahren nach Anspruch 4, **dadurch gekennzeichnet, dass** das Element (20) in einer Form (60) angeordnet wird und die Form (60) anschließend so mit der Umhüllmasse (30) gefüllt wird, dass sie den Außenbereich des Elements (20) mit einer vorgebbaren Dicke (d) bedeckt.

6. Verfahren nach Anspruch 4, **dadurch gekennzeichnet, dass** die Öffnungen (21) im Außenbereich mittels einer Abdeckung (70) abgedeckt werden, die nach einem Erhärten der Umhüllmasse (30) im Innenbereich und in den Öffnungen (21) wieder entfernt wird.

## Claims

1. Encapsulated component (10), having a thermally conductive element (20) and a thermally conductive encapsulation compound (30) which fills an interior region of the element (20), wherein the element (20) has multiple openings (21) which connect the interior region to an exterior region of the element (20), wherein the encapsulation compound (30) fills the openings (21), wherein the element (20) is a coil pot, **characterized in that** the openings (21) are formed as bores in a metal sheet and each have a countersink (22) at their end facing towards the exterior region.

2. Encapsulated component (10) according to Claim 1, **characterized in that** the encapsulation compound (30) is furthermore arranged in the exterior region.

3. Encapsulated component (10) according to either of Claims 1 and 2, **characterized in that** it has a heat source (50) which is completely surrounded by the encapsulation compound (30).

4. Method for producing an encapsulated component (10) according to Claim 3, wherein at least one heat source (50) is arranged in an interior region of a thermally conductive element (20) which has multiple openings (21), and the element (20) is then filled with an encapsulation compound (30) such that this ingresses into the openings (21).

5. Method according to Claim 4, **characterized in that** the element (20) is arranged in a mould (60), and the mould (60) is subsequently filled with the encapsulation compound (30) such that this covers the exterior region of the element (20) with a predefinable thickness (d).

6. Method according to Claim 4, **characterized in that** the openings (21) are covered in the exterior region by means of a cover (70), which is removed again after curing of the encapsulation compound (30) in the interior region and in the openings (21).

## Revendications

1. Composant enrobé (10), comportant un élément (20) conducteur de chaleur et une masse d'enrobage (30) conductrice de chaleur qui comble une zone intérieure de l'élément (20), l'élément (20) comportant plusieurs ouvertures (21) qui relient la zone intérieure à une zone extérieure de l'élément (20), la masse d'enrobage (30) comblant les ouvertures (21), l'élément (20) étant un pot de bobine, **caractérisé en ce que** les ouvertures (21) sont réalisées sous forme d'alésages dans une tôle et présentent respectivement un creux (22) à leur extrémité tournée vers la zone extérieure.

2. Composant enrobé (10) selon la revendication 1, **caractérisé en ce que** la masse d'enrobage (30) est en outre disposée dans la zone extérieure.

3. Composant enrobé (10) selon l'une quelconque des revendications 1 ou 2, **caractérisé en ce qu'**il comporte une source de chaleur (50) qui est complètement entourée par la masse d'enrobage (30).

4. Procédé de fabrication d'un composant enrobé (10) selon la revendication 3, dans lequel au moins une source de chaleur (50) est disposée dans une zone intérieure d'un élément (20) conducteur de chaleur qui comporte plusieurs ouvertures (21), et l'élément (20) est ensuite rempli d'une masse d'enrobage (30) de telle sorte que cette dernière pénètre dans les ouvertures (21).

5. Procédé selon la revendication 4, **caractérisé en ce que** l'élément (20) est disposé dans un moule (60), et **en ce que** le moule (60) est ensuite rempli de la masse d'enrobage (30) de telle sorte qu'elle recouvre la zone extérieure de l'élément (20) sur une épaisseur (d) prédéfinissable.

6. Procédé selon la revendication 4, **caractérisé en ce que** les ouvertures (21) sont recouvertes dans la zone extérieure au moyen d'un couvercle (70) qui est à nouveau retiré après un durcissement de la masse d'enrobage (30) dans la zone intérieure et dans les ouvertures (21).
